# EUROPÄISCHE PATENTSCHRIFT

(11) **EP 2 663 661 B1**
(45) Veröffentlichungstag und Bekanntmachung des Hinweises auf die Patenterteilung: **09.09.2015**
(21) Anmeldenummer: 12700253.3
(22) Anmeldetag: 02.01.2012
(51) Int. Cl.: C21C 5/52

(54) **VERFAHREN ZUR BEHANDLUNG EINES KOHLENDIOXIDHALTIGEN ABGASES AUS EINEM ELEKTROSCHMELZPROZESS**
METHOD FOR TREATING A CARBON DIOXIDE-CONTAINING WASTE GAS FROM AN ELECTROFUSION PROCESS
PROCÉDÉ DE TRAITEMENT D'UN GAZ DE COMBUSTION CONTENANT DU DIOXYDE DE CARBONE PROVENANT D'UN PROCESSUS D'ÉLECTROFUSION

(30) Priorität: 13.01.2011 DE 102011002615
(43) Veröffentlichungstag der Anmeldung: 20.11.2013
(73) Patentinhaber: Primetals Technologies Germany GmbH, 91052 Erlangen (DE)
(72) Erfinder: BALDAUF, Manfred, 91056 Erlangen (DE); MATSCHULLAT, Thomas, 90542 Eckental (DE)
(74) Vertreter: Metals@Linz
(86) Internationale Anmeldenummer: PCT/EP2012/050017
(87) Internationale Veröffentlichungsnummer: WO 2012/095329

(56) Entgegenhaltungen:
- WO-A1-2010/046211
- JP-A- 2010 223 573
- US-A- 3 976 472
- US-A- 4 244 732

## Beschreibung

Die Erfindung betrifft ein Verfahren zur Behandlung eines kohlendioxidhaltigen Abgases aus einem Elektroschmelzprozess nach Patentanspruch 1.

Beim Betrieb eines konventionellen Elektrolichtbogenofens (EAF = electric arc furnace) entweichen heiße Abgase mit einer Temperatur von mehr als 1000°C. Zur Entfernung von Schadstoffen und Resten von brennbaren Bestandteilen wird das Gas zunächst einer Nachverbrennung unterworfen. Anschließend werden die Abgase mit Luft aus der Umgebung des Ofens, also mit einer so genannten Hallenluft, vermischt, die einen sehr hohen Staubanteil hat. Durch einen elektrostatischen Staubabscheider oder durch eine Schlauchfilteranlage wird der gesamte Staub des Abgases entfernt. Dazu muss das Abgas vor dem Filtern auf eine Temperatur von weniger als 180° abgekühlt werden.

Bei einem Schacht-Lichtbogenofen wird die Enthalpie des Ofenabgases zur Schrottvorwärmung genutzt. Dadurch kommt es zu erhöhten Schadstoffkonzentrationen (z. B. VOC, Dioxine, Furane oder ähnlichem), so dass eine Nachverbrennung zur Zerstörung dieser Schadstoffe notwendig ist. Anschließend müssen die Abgase schnell gekühlt werden (gequencht), um eine erneute Bildung der Schadstoffe zu vermeiden. Danach erfolgt ebenfalls, wie oben beschrieben, eine Entstaubung. Nach dem Stand der Technik wird die Wärme dem Abgas durch Wasserkühlung und/oder Zumischen von kalter, staubbeladener Hallenluft entzogen und nicht weiter genutzt. Die Abwärme wird weggekühlt und nicht für andere Prozesse verwendet. Gegebenenfalls wird in einigen Anlagen ein Wärmetauscher angewandt, um das Abgas zur Erzeugung von Dampf heranzuziehen. Insbesondere wird das in den Abgasen enthaltene Kohlendioxid nicht umgewandelt, sondern im Kamin in die Umgebung abgeleitet.

Die JP 2010 223573 A offenbart ein Verfahren zur Behandlung eines Abgases aus dem Eisen- bzw. Stahlherstellung, z.B. aus Elektrolichtbogenofen. Das kohledioxidhaltige Gas wird durch eine endotherme Reaktion mit einem kohlenwasserstoffhaltigen Gas, z.B. Methan, reformiert in Kohlenmonoxid und Wasserstoff. Das entstehende Gas wird als Brenngas weiterverwendet.

Weiterhin offenbart die US 3 976 472 A ein Verfahren zur Metallherstellung in einem Elektroofen. Das kohlendioxidhaltige Abgas wird durch eine Reaktion z.B. mit Wasser und/oder Kohlenwasserstoffe unter der Bildung vom Kohlenmonoxid und Wasserstoffe abgekühlt.

Die Aufgabe der Erfindung besteht darin, die beim Betrieb eines Elektrolichtbogenofens anfallende Abwärme im Vergleich zum Stand der Technik besser rückzugewinnen und gleichzeitig den am Prozess entstehenden CO₂-Ausstoß zu verringern.

Die Lösung der Aufgabe besteht in einem Verfahren mit den Merkmalen des Patentanspruchs 1. Nach dem erfindungsgemäßen Verfahren zur Behandlung eines kohlendioxidhaltigen Abgases aus dem Eisenschrott-Aufschmelzprozess wird dem Abgas ein kohlenwasserstoffhaltiges Gas zugeführt. Dieses kohlenwasserstoffhaltige Gas reagiert mit dem Kohlendioxid, das im Abgas vorhanden ist, in einer Reaktion zumindest teilweise zu Kohlenmonoxid und Wasserstoff. Dieses Kohlenmonoxid-Wasserstoffgemisch wird bevorzugt ohne weitere Separation gemeinsam mit den übrigen Abgaskomponenten für einen weiteren Verbrennungsprozess verwendet, wobei es vorher zwischengespeichert wird. Dieser weitere Verbrennungsprozess kann, muss aber nicht zwangsläufig Bestandteil des Verfahrens sein, in dem das behandelte Abgas anfällt.

Weiterhin wird bevorzugt dem Abgas aus dem Elektroschmelzprozess (beispielsweise bei der Elektroschrottaufschmelzung) Luft zugeführt, es folgt ein Nachverbrennungsprozess unter Verwendung eines Brenngases, anschließend wird dem Abgas das kohlenwasserstoffhaltige Gas, also das Reformiergas, zugeführt und es erfolgt die Reaktion zur Umwandlung des Reformiergases in das Kohlenmonoxid-Wasserstoffgemisch (im Weiteren Trockenreformierung genannt). Das Brenngas wird in einem dafür vorgesehenen Gasbehälter zwischengespeichert. So kann es für verschiedene weitere Verbrennungsprozesse unter anderem für den Nachverbrennungsprozess verwendet werden und bei Bedarf zielgerichtet eingesetzt werden. Im Weiteren erfolgen ein Abkühlen des Abgases in einem Wärmetauschprozess sowie das anschließende Filtern des abgekühlten Abgases.

Durch das erfindungsgemäße Verfahren wird das entstandene Kohlendioxid (CO₂) reduziert und in chemisch umgewandelter Form ein weiteres Mal dem Verbrennungsprozess zugeführt.

Dieses Verfahren ist insbesondere dann zweckmäßig, wenn das Kohlendioxid im Abgas mit dem kohlenwasserstoffhaltigen Gas eine endotherme Reaktion eingeht und das Abgas durch diese Reaktion abgekühlt wird. Das Kohlenmonoxid-Wasserstoffgemisch (im Weiteren vereinfachend Brenngas genannt) weist in bevorzugter Ausgestaltungsform einen höheren Brennwert auf als das eingebrachte kohlenwasserstoffhaltige Gas (im Weiteren Reformiergas genannt). Dies führt zu der bereits erwähnten vorteilhaften endothermen Reaktion.

Somit wird durch die Erfindung ein wesentlicher Anteil des umweltschädlichen Kohlendioxids dem Abgas entzogen und es kann in umgewandelter Form als Brenngas einem weiteren Verbrennungsprozess zugeführt werden. Somit wird die Wärmeenergie des Abgases in chemische Energie des erzeugten Brenngases umgewandelt.

Es hat sich als zweckmäßig herausgestellt, als kohlenwasserstoffhaltiges Reformiergas Methan, insbesondere in Form von Erdgas, zu verwenden. Hierbei stellt sich eine für die Rückgewinnung des Kohlendioxids stark endotherme Reaktion ein, die zur Bildung von Kohlenmonoxid und Wasserstoff führt.

In einer weiteren vorteilhaften Ausgestaltungsform der Erfindung wird das beschriebene Verfahren zur Behandlung des Abgases eines Elektrolichtbogenofens eingesetzt.

In einer Ausgestaltungsform der Erfindung kann dem Abgas neben dem Reformiergas noch Wasser, bevorzugt in dampfförmiger Form, zugegeben werden. Durch die Zuführung von zusätzlichem Wasser wird das Verhältnis von Kohlenmonoxid zu Wasserstoff verändert, was bei verschiedenen Anwendungen als Brenngas zweckmäßig ist.

In einer weiteren vorteilhaften Ausgestaltungsform kann das Abgas zur Regelung der Zufuhr des Reformiergases mit einem Gassensor überwacht werden.

Weitere bevorzugte Ausgestaltungsformen und weitere Merkmale der Erfindung werden anhand der folgenden Zeichnungen näher erläutert.

Dabei zeigen:
- Figur 1: eine schematische Darstellung eines Eisenschrott-Aufschmelzprozesses und dessen Abluftbehandlung mit einer eingegliederten Trockenreformierung,
- Figur 2: ein Blockschaubild zur Darstellung des Abgasbehandlungsprozesses bei der Eisenschritt-Aufschmelzung nach dem Stand der Technik und
- Figur 3: im Vergleich zu Figur 2 ein Blockschaubild des Abgasbehandlungsprozesses mit einer Trockenreformierung.

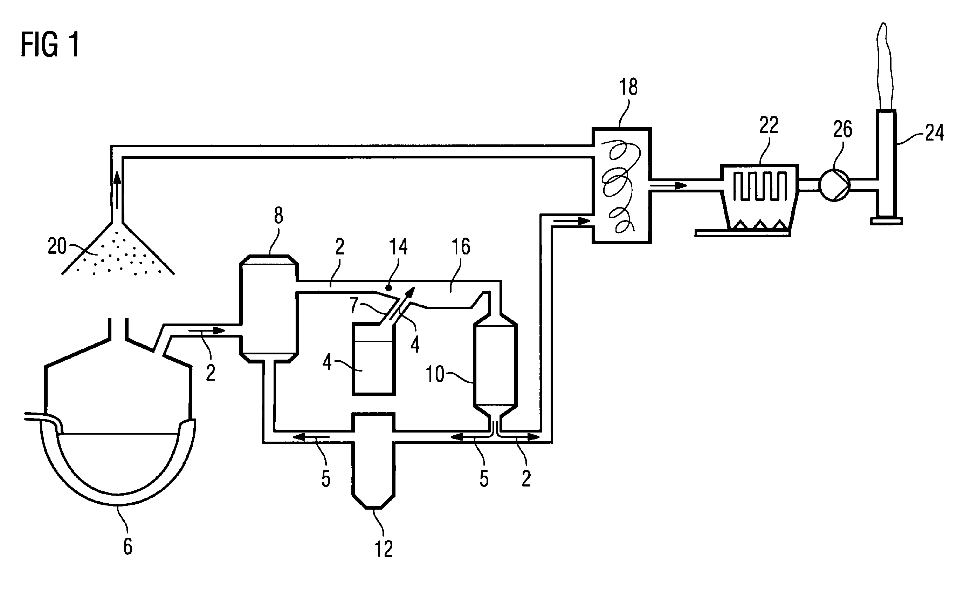

Im Folgenden soll anhand der Figur 1 der Ablauf der Abgasbehandlung, die bei der Eisenschrott-Aufschmelzung angewandt wird, näher erläutert werden. Ausgehend von einem Elektrolichtbogenofen 6 wird das hierbei entstandene CO₂-haltige Abgas in einen Abgaskanal geleitet. Ein Abgassensor 14 überwacht die einzelnen chemischen Bestandteile des Abgases, insbesondere den CO₂-Anteil des Abgases. Hier nicht dargestellt, wird das Abgas 2 noch dazu verwandt, weiteren Schrott, der dem Elektrolichtbogenofen 6 zugeführt wird, aufzuheizen. Die dabei dem Abgas zugeführten giftigen Stoffe wie Dioxine werden in einem Nachverbrennungsprozess 8 chemisch umgewandelt und somit unschädlich gemacht. Es folgt ein Trockenreformierprozess 16, bei dem Reformiergas 4 dem Abgas 2 zugeführt wird, wobei das Kohlendioxid zu Kohlenmonoxid reduziert wird. Auf diesen Prozess wird später noch näher eingegangen. Nach dem Reformierprozess 16 (auch Trockenreformierung genannt) folgt ein Wärmetauschprozess 10, bei dem das Abgas 2 abgekühlt wird. Das Brenngas 5 wird - in der Regel ohne vorherige Separierung von den andern Abgaskomponenten gemeinsam mit diesen - in einem Gasbehälter 12 zwischengelagert und kann beispielsweise dem Nachverbrennungsprozess 8 als Brenngas 5 wieder zugeführt werden. Ebenso kann das Brenngas 12 für weitere thermische Verfahren, insbesondere solche Verfahren, die im Bereich der Stahlerzeugung anfallen, als Energiespeicher genutzt werden.

Falls kein Brenngas erzeugt und gespeichert wird, wird das Abgas 2 zusammen mit staubhaltiger Hallenluft 20 in einer Mischkammer 18 vermischt und es wird anschließend in einem Filter 22 der Staub aus dem Abgas 2 herausgefiltert. Bei verschiedenen Filteranlagen sollte die Gastemperatur nicht mehr als 180°C betragen. Ein Gebläse 26 fördert das Abgas 2, in einen Schornstein 24.

Der Kohlendioxidgehalt des Abgases 2 nach dem Austreten aus dem Elektrolichtbogenofen 6 weist je nach Betriebsbedingung unterschiedliche Gehalte an Kohlendioxid auf. Daher wird über dem Sensor 14 der Kohlendioxidgehalt des Abgases 2 gemessen und somit die Zugabe an Reformiergas 4 zum Abgas 2 gesteuert. Das Reformiergas 4, für das beispielsweise Erdgas mit einem hohen Methananteil verwendet werden kann, reagiert mit dem Kohlendioxid des Abgases 2 zumindest teilweise gemäß der folgenden Reaktionsgleichung (Trockenreformierung 16).

CH₄ + CO₂ → 2CO + 2H₂ ΔH = +250 kJ/mol

Diese Reaktion ist endotherm, es werden pro Mol 250 kJ Wärmeenergie der Umgebung, also dem Abgas 2, entzogen. Auf diese Weise wird durch die Reaktion Wärmeenergie umgewandelt, die in dem gebildeten Brenngas 5 (CO+H₂ auch Synthesegas genannt) als chemische Energie gespeichert ist. Demnach wird also thermische Energie in chemische Energie umgewandelt, da das gemäß Gleichung 1 entstandene Brenngas 5 einen höheren Brennwert aufweist als das ursprünglich eingesetzte Reformiergas (Methan).

Die einzelnen Brennwerte der Edukte und Produkte lauten:
CH₄: 55,5 MJ/kg = 888 MJ/kmol
CO: 10,1 MJ/kg = 283 MJ/kmol
H₂: 143 MJ/kg = 286 MJ/kmol

Der Brennwert eines Gemisches aus 2 Mol Kohlenmonoxid und 2 Mol H₂ ist um die oben genannte Reaktionsenthalpie von 250 kJ/mol höher als der Brennwert eines Mols CH₄ (Methan). Die Brennwerterhöhung beträgt somit 28 % des eingebrachten Brennwerts des Methans (255 kJ/mol: 888 kJ/mol).

Je nach Verwendung des Brenngases 5 kann es sinnvoll sein, das CO:H2-Verhältnis zu Gunsten des Wasserstoffes zu verschieben. In diesem Fall wird Wasser (bevorzugt in Dampfform) gegebenenfalls ebenfalls an der Reformiergaszuführung 7 mit eingeführt. Somit wird eine exotherme CO-Shiftreaktion ermöglicht, wonach

H₂O + CO → CO₂ + H₂ ΔH = H-42 kJ/mol

das Verhältnis von H₂ zu CO verändert wird. Dadurch wird zwar weniger Abwärme gespeichert, da es sich hier um eine exotherme Reaktion handelt, aber es wird ein höherer H₂-Gehalt im Brenngas 5 erzielt, der in einigen Verbrennungsprozessen vorteilhaft ist. Das ist insbesondere dann der Fall, wenn in diesen Verbrennungsprozessen der Wärmetransport durch Strahlung und nicht durch Konvektion erfolgt. Aus der H₂-Ver-brennung resultiert im Abgas 2 ein höherer Gehalt an Wasser, das durch sein breites Strahlungsbrand den Wärmetransport begünstigt.

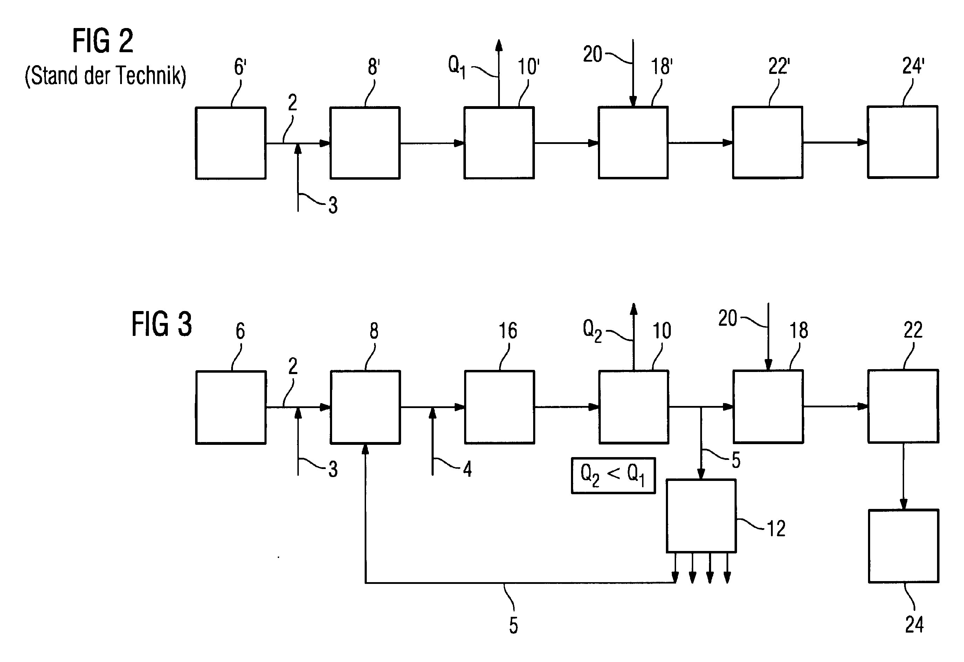

In den Figuren 2 und 3 ist der gerade beschriebene Prozess zur Abgasbehandlung anhand von zwei Blockschaubildern gegenüberstellend verglichen. Figur 2 stellt die Abgasbehandlung gemäß des Standes der Technik dar, Figur 3 zeigt den Einschub der Trockenreformierung und die daraus resultierenden Verbesserungen.

Ausgehend von dem Elektroschmelzofen 6 wird das Abgas 2 einer Nachverbrennung 8 zugeführt, wobei Luft 3 mit eingebracht wird. In einem weiteren Wärmetauschprozess 10 wird Energie Q1 an ein Wärmetauschmedium abgegeben. Es erfolgt in einer Mischkammer 18 eine Mischung mit staubhaltiger Luft 20, wobei das gesamte Abgas anschließend in einer Filteranlage 22 gefiltert wird und dem Schornstein mit dem voll angefallenen Dioxidgehalt an die Umgebung abgegeben wird.

Der Prozess zur Abgasbehandlung mit Trockenreformierung gemäß Figur 3 unterscheidet sich von der Figur 2 darin, dass zwischen dem Nachverbrennungsprozess 8 und dem Wärmetauschprozess 10 ein Trockenreformierprozess 16 eingeführt wird, wobei Reformiergas 4 dem Abgas 2 zugeführt wird und eine endotherme Reaktion unter Reduktion des anfallenden Kohlendioxides stattfindet. Der erste Unterschied zur Figur 2 besteht darin, dass die im Wärmetauschprozess 10 abgegebene Wärme Q2 geringer ist als die Wärmemenge Q1 nach dem Stand der Technik. Dies resultiert daraus, dass durch die endotherme Trockenreformation 16 dem Abgas 2 mehr Wärmeenergie entzogen wird, als dies nach dem Stand der Technik der Fall ist.

Ferner wird dem Abgas 2 mit dem Brenngas 5 im Gasbehälter 12 zwischengespeichert. Das Brenngas 5 kann für den Nachverbrennungsprozess 8 genutzt werden und dabei das beim Stand der Technik verwendete Erdgas zumindest teilweise ersetzen. Die Gesamtmenge des durch den Schornstein 24 abgegebenen Kohlendioxids ist bei diesem Verfahren deutlich geringer als dies nach dem Stand der Technik der Fall ist.

Die Abgase von Elektroschmelzöfen 6 enthalten während des Betriebes in langen Phasen (> 50 %) sehr niedrige Konzentrationen an Kohlenmonoxid (CO ~ 5 %) und CO₂ (< 10 %). In diesen Betriebszeiten lohnt sich der Einsatz der oben beschriebenen Trockenreformierung von Erdgas nur bedingt, da kein ausreichend hoher Anteil an brennbaren Komponenten im Abgas erzeugt werden kann. Grund hierfür ist, dass der Elektroschmelzofen 6 üblicherweise Falschluft ansaugt (beispielsweise über die Schlackentür oder durch Elektrodenlöcher) und das Abgas deshalb eine relativ hohe Konzentration an Sauerstoff und Stickstoff enthält. In anderen Betriebsphasen kann das Abgas vor der Nachverbrennung 20 % bis 50 % Kohlenmonoxid und 10 % bis 15 % Kohlendioxid enthalten. Nach der Nachverbrennung ist dann genügend Kohlendioxid vorhanden, um durch den beschriebenen Trockenreformierprozess 16 ein Abgas mit ausreichend hohen Synthesegasanteilen zu erzeugen, das für thermische Nutzung im Stahlwerk, wie beschrieben, geeignet ist. Der Einsatz des erfindungsgemäßen Verfahrens ist insbesondere in der letzteren Betriebsphase zweckmäßig.

Der Energieinhalt des gebildeten Brenngases (Synthesegases) kann in geeigneten Anlagenteilen des Stahlwerkes genutzt werden. Dies kann beispielsweise zur Stromerzeugung in einem Kraftwerk, zur Prozessdampferzeugung gegebenenfalls in Kombination mit der Stromerzeugung oder als Brenngas zur Brammen-, Knüppel- oder Vorblockvorwärmung in Hubherdöfen bzw. Stoßöfen oder in Brennern (EAF, Brammentrocknung und -heizung, Heizstation, Verteiler, Stranggießanlagen) erfolgen.

## Patentansprüche

1. Verfahren zur Behandlung eines kohlendioxidhaltigen Abgases (2) aus einem Elektroschmelzprozess, wobei dem Abgas ein kohlenwasserstoffhaltiges Gas (4) zugeführt wird und das Kohlendioxid des Abgases (2) in einer Reaktion zumindest teilweise in Kohlenmonoxid und Wasserstoff umgewandelt wird und das Kohlenmonoxid-Wasserstoff-Gemisch (5) für einen weiteren Verbrennungsprozess verwendet wird und umfassend folgende Schritte:
- einen Nachverbrennungsprozess (8) unter Verwendung eines Brenngases,
- Zugeben des kohlenwasserstoffhaltigen Gases (4) und Reaktion des selbigen mit dem im Abgas (2) vorhandenen Kohlendioxid,
- Zwischenspeichern des Abgases (2) mit dem Kohlenmonoxid-Wasserstoffgemisch (5) in einem Gasbehälter (12),
- weiteres Abkühlen des Abgases (2) in einem Wärmetauschprozess (10),
- thermisches Nutzen des abgekühlten Abgases zusammen mit dem gebildeten Kohlenmonoxid und Wasserstoff (5).

2. Verfahren nach Anspruch 1, **dadurch gekennzeichnet, dass** das Kohlendioxid im Abgas (2) mit dem kohlenwasserstoffhaltigen Gas (4) eine endotherme Reaktion eingeht und das Abgas (2) durch diese Reaktion abgekühlt wird.

3. Verfahren nach Anspruch 1 oder 2, **dadurch gekennzeichnet, dass** das kohlenwasserstoffhaltige Gas (4) Methan enthält.

4. Verfahren nach einem der vorhergehenden Ansprüche, **dadurch gekennzeichnet, dass** das Abgas (2) in einem Elektrolichtbogenofen (6) anfällt.

5. Verfahren nach einem der vorherigen Ansprüche, **dadurch gekennzeichnet, dass** Kohlenmonoxid-Wasserstoff-Gemisch (5) als Brenngas im Nachverbrennungsprozess verwendet wird.

6. Verfahren nach einem der vorherigen Ansprüche, **dadurch gekennzeichnet, dass** Kohlenmonoxid-Wasserstoff-Gemisch (5) als Brenngas in anderen Verbrennungsprozessen eines Stahlwerkes verwendet wird.

7. Verfahren nach einem der vorhergehenden Ansprüche, **dadurch gekennzeichnet, dass** dem Abgas neben dem kohlenwasserstoffhaltigen Gas (4) Wasser zugefügt wird.

8. Verfahren nach Anspruch 7, **dadurch gekennzeichnet, dass** das Wasser zur Umwandlung von CO in CO₂ und H₂ dient.

9. Verfahren nach einem der vorhergehenden Ansprüche, **dadurch gekennzeichnet, dass** der Kohlendioxidgehalt des Abgases (2) zur Regelung der Zufuhr des kohlenwasserstoffhaltigen Gases (4) mit einem Gassensor (14) überwacht wird.

## Claims

1. Method for treatment of a carbon dioxide-containing waste gas (2) from an electric smelting process, wherein a hydrocarbon-containing gas (4) is fed to the waste gas and the carbon dioxide of the waste gas (2) is converted in a reaction at least partly into carbon monoxide and hydrogen and the carbon monoxide-hydrogen mixture (5) is used for a further combustion process and comprising the following steps:
- A re-combustion process (8) using a combustion gas,
- Adding the hydrocarbon-containing gas (4) and reaction of the same with carbon dioxide present in the waste gas (2),
- Intermediate storage of the waste gas with the carbon monoxide-hydrogen mixture (5) in a gas holder (12),
- Further cooling of the waste gas (2) in a heat exchange process (10),
- Thermal use of the cooled waste gas together with the carbon monoxide and hydrogen (2) formed.

2. Method according to claim 1, **characterised in that** the carbon dioxide in the waste gas (2) enters into an endothermic reaction with the hydrocarbon-containing gas (4) and the waste gas (2) is cooled by this reaction.

3. Method according to claim 1 or 2, **characterised in that** the hydrocarbon-containing gas (4) contains methane.

4. Method according to one of the preceding claims, **characterised in that** the waste gas (2) occurs in an electric arc furnace (6).

5. Method according to one of the preceding claims, **characterised in that** the carbon monoxide-hydrogen mixture (5) is used as the combustion gas in the re-combustion process.

6. Method according to one of the preceding claims, **characterised in that** the carbon monoxide-hydrogen mixture (5) is used as the combustion gas in other combustion processes of a steelworks.

7. Method according to one of the preceding claims, **characterised in that**, as well as the hydrocarbon-containing gas (4), water is added to the waste gas.

8. Method according to claim 7, **characterised in that** the water serves to convert CO into CO₂ and H₂.

9. Method according to one of preceding claims, **characterised in that**, to regulate the supply of hydrocarbon-containing gas (4), the carbon-dioxide content of the waste gas (2) is monitored with a gas sensor (14).

## Revendications

1. Procédé de traitement d'un gaz ( 2 ) de combustion contenant du dioxyde de carbone d'un processus d'électrofusion, dans lequel on apporte au gaz de combustion un gaz ( 4 ) contenant un hydrocarbure et on transforme le dioxyde de carbone du gaz ( 2 ) de combustion dans une réaction au moins en partie en monoxyde de carbone et en hydrogène et on utilise le mélange ( 5 ) de monoxyde de carbone et d'hydrogène pour un autre processus de combustion et comprenant les stades suivants :
- un processus ( 8 ) de post-combustion en utilisant un gaz combustible,
- l'addition du gaz ( 4 ) contenant un hydrocarbure et la réaction de celui-ci sur le dioxyde de carbone présent dans le gaz ( 2 ) de combustion,
- le stockage intermédiaire du gaz ( 2 ) de combustion avec le mélange ( 5 ) de monoxyde de carbone et d'hydrogène dans un récipient ( 12 ) à gaz,
- le refroidissement supplémentaire du gaz ( 2 ) de combustion dans un processus ( 10 ) d'échange de chaleur,
- l'utilisation thermique du gaz de combustion refroidi ensemble avec le monoxyde de carbone et l'hydrogène ( 5 ) formés.

2. Procédé suivant la revendication 1, **caractérisé en ce que** le dioxyde de carbone, dans le gaz ( 2 ) de combustion, entre dans une réaction endothermique avec le gaz ( 4 ) contenant un hydrocarbure et le gaz ( 2 ) de combustion est refroidi par cette réaction.

3. Procédé suivant la revendication 1 ou 2, **caractérisé en ce que** le gaz ( 4 ) contenant un hydrocarbure contient du méthane.

4. Procédé suivant l'une des revendications précédentes, **caractérisé en ce que** le gaz ( 2 ) de combustion se produit dans un four ( 6 ) à arc électrique.

5. Procédé suivant l'une des revendications précédentes, **caractérisé en ce qu'**on utilise le mélange ( 5 ) de monoxyde de carbone et d'hydrogène comme gaz combustible dans le processus de post-combustion.

6. Procédé suivant l'une des revendications précédentes, **caractérisé en ce que** l'on utilise le mélange ( 5 ) de monoxyde de carbone et d'hydrogène comme gaz combustible dans d'autres processus de combustion d'une aciérie.

7. Procédé suivant l'une des revendications précédentes, **caractérisé en ce que** l'on ajoute de l'eau au gaz de combustion, en plus du gaz ( 4 ) contenant un hydrocarbure.

8. Procédé suivant la revendication 7, **caractérisé en ce que** l'eau sert à la transformation de CO en CO₂ et H₂.

9. Procédé suivant l'une des revendications précédentes, **caractérisé en ce que** l'on contrôle, par un capteur ( 14 ) de gaz, la teneur en dioxyde de carbone du gaz ( 2 ) de combustion, pour réguler l'apport du gaz ( 4 ) contenant un hydrocarbure.
